# EUROPÄISCHE PATENTANMELDUNG

(11) **EP 3 726 708 A1**
(43) Veröffentlichungstag der Anmeldung: **21.10.2020**
(21) Anmeldenummer: 19169549.3
(22) Anmeldetag: 16.04.2019
(51) Int. Cl.: H02K 9/20, H02K 11/042, H02K 19/38

(54) **GLEICHRICHTERVORRICHTUNG, VERFAHREN ZU DEREN HERSTELLUNG UND ERREGERMASCHINE**

(71) Anmelder: Siemens Aktiengesellschaft, 80333 München (DE)
(72) Erfinder: Rehme, Olaf, 20148 Hamburg (DE); Schneck, Jakob, 10245 Berlin (DE); Seibicke, Frank, 14822 Borkheide (DE)

(57) **Zusammenfassung**

Die Erfindung betrifft eine Gleichrichtervorrichtung (7) zum Gleichrichten eines elektrischen Wechselstroms. Die Gleichrichtervorrichtung (7) umfasst einen Träger (15) und an einem Gleichrichterbereich (19) des Trägers (15) angeordnete elektrische Bauelemente (17), wobei der Träger (15) wenigstens einen Trägerhohlraum (31, 41) mit einem hermetisch gekapselten Volumen aufweist, in dem ein Kühlmedium (32, 42) zur Aufnahme von den elektrischen Bauelementen (17) erzeugter Wärme angeordnet ist.

## Beschreibung

Die Erfindung betrifft eine Gleichrichtervorrichtung, ein Verfahren zu deren Herstellung und eine Erregermaschine.

Eine Erregermaschine ist eine elektrische Maschine, die einen Erregerstrom für einen Generator erzeugt. In der Regel umfasst eine Erregermaschine eine Wechselstrommaschine, die einen Wechselstrom generiert, und eine Gleichrichtervorrichtung, die den Wechselstrom zu einem Gleichstrom gleichrichtet. Gleichrichtervorrichtungen von Erregermaschinen werden auch als Diodenräder bezeichnet, da sie häufig radförmig gestaltet sind und Dioden zum Gleichrichten des Wechselstroms aufweisen. Jedoch kann die Gleichrichtervorrichtung einer Erregermaschine auch andere elektrische Bauelemente als Dioden zum Gleichrichten des Wechselstroms aufweisen, beispielsweise Thyristoren. Die elektrischen Bauelemente erzeugen während des Betriebs der Erregermaschine Wärme, die von den elektrischen Bauelementen weg transportiert werden muss, um die elektrischen Bauelemente beispielsweise vor vorzeitigem Versagen zu schützen. Dazu weist die Gleichrichtervorrichtung einer Erregermaschine beispielsweise Kühlkörper auf, die wesentlich zu ihrer Masse beitragen.

Die Gleichrichtervorrichtung einer Erregermaschine ist in der Regel zusammen mit dem Rotor der Erregermaschine fest an einer Rotorwelle angeordnet und rotiert daher zusammen mit dem Rotor und der Rotorwelle. Insbesondere im Bereich einer überkritischen, innenliegenden Erregermaschine, die beispielsweise als Antrieb für einen Kompressor in der Öl- und Gasindustrie dient, ist es von hohem Nutzen, den Abstand zwischen den Hauptlagern der Rotorwelle zu reduzieren, um ein breites Spektrum an Rotationsfrequenzen zu ermöglichen, ohne dass schädliche Eigenfrequenzen auftreten. Wenn der Rotor aus rotordynamischen Gründen in axialer Richtung über die Hauptlager hinausragt, wirkt eine größere Hebelkraft auf die Hauptlager und die Konstruktion wird insgesamt deutlich aufwändiger. Es ist daher von Vorteil, eine Erregermaschine möglichst kurz und leicht zu gestalten, wodurch überdies auch Kosten und Material eingespart werden können. An der Gleichrichtervorrichtung einer Erregermaschine sind Kühlkörper, beispielsweise Kühlkörper mit Kühlrippen zur Luftkühlung, häufig nahe dem Umfang der Gleichrichtervorrichtung angebracht, um dort eine optimale Kühlung durch maximale Umströmungsgeschwindigkeit mit der umgebenden Luft zu haben. Dieses ist jedoch aus mechanischer Sicht ungünstig, da die Masse der Kühlkörper dann durch die große Entfernung vom Rotationszentrum hohe Kräfte auf die Struktur der Gleichrichtervorrichtung ausübt. Ferner erzeugt eine derartige Anordnung von Kühlkörpern ein großes Trägheitsmoment bezogen auf die Rotationsachse und ist daher generell nachteilig für das dynamische Verhalten des Rotors der Erregermaschine. Um die Festigkeitsanforderungen an die Struktur einer Gleichrichtervorrichtung einer Erregermaschine, insbesondere bei hohen Drehzahlen der Rotation des Rotors, zu erfüllen, wird eine Gleichrichtervorrichtung häufig aus Stahlwerkstoffen gefertigt.

Der Erfindung liegt die Aufgabe zugrunde, eine Gleichrichtervorrichtung anzugeben, die insbesondere hinsichtlich ihrer Kühlung und Massenverteilung bei der Verwendung für eine Erregermaschine verbessert ist.

Die Aufgabe wird erfindungsgemäß durch eine Gleichrichtervorrichtung mit den Merkmalen des Anspruchs 1, ein Verfahren zu deren Herstellung mit den Merkmalen des Anspruchs 12 und eine Erregermaschine mit den Merkmalen des Anspruchs 15 gelöst.

Vorteilhafte Ausgestaltungen der Erfindung sind Gegenstand der Unteransprüche.

Eine erfindungsgemäße Gleichrichtervorrichtung zum Gleichrichten eines elektrischen Wechselstroms umfasst einen Träger und an einem Gleichrichterbereich des Trägers angeordnete elektrische Bauelemente, wobei der Träger wenigstens einen Trägerhohlraum mit einem hermetisch gekapselten Volumen aufweist, in dem ein Kühlmedium zur Aufnahme von Wärme angeordnet ist, die von den elektrischen Bauelementen erzeugt wird.

Eine erfindungsgemäße Gleichrichtervorrichtung ermöglicht eine Kühlung der elektrischen Bauelemente durch ein Kühlmedium, das in einem Trägerhohlraum des Trägers angeordnet ist. Mittels des Kühlmediums kann insbesondere Wärme von den elektrischen Bauelementen zu anderen Orten des Trägers transportiert werden, an denen von dem Kühlmedium aufgenommene Wärme abgeführt werden kann, beispielsweise durch an diesen Orten angeordnete Kühlstrukturen wie Kühlrippen. Dadurch kann zum einen die Kühlung der Gleichrichtervorrichtung durch die Verteilung der Wärme mittels des Kühlmediums verbessert werden. Zum anderen kann auch die Massenverteilung der Gleichrichtervorrichtung durch eine geeignete Anordnung der Kühlstrukturen verbessert werden.

Ausgestaltungen der Gleichrichtervorrichtung sehen vor, dass der Gleichrichterbereich des Trägers ringförmig um den Massenmittelpunkt des Trägers herum verläuft, und/oder dass der Gleichrichterbereich ein Randbereich des Trägers ist. Dadurch können die elektrischen Bauelemente insbesondere weit entfernt von einer Rotationsachse der Gleichrichtervorrichtung angeordnet werden, so dass in der Nähe der Rotationsachse Platz für die Anordnung von Kühlstrukturen ist. Dies ist vorteilhaft, da die elektrischen Bauelemente eine kleinere Masse als die Kühlstrukturen haben und daher einen kleineren Beitrag zu dem Trägheitsmoment der Gleichrichtervorrichtung leisten als die Kühlstrukturen.

Bei einer weiteren Ausgestaltung der Gleichrichtervorrichtung ist wenigstens ein Trägerhohlraum ein Kühlkanal, in dem als Kühlmedium ein Kühlfluid angeordnet ist und der einen in dem Gleichrichterbereich des Trägers verlaufenden Verdampfungsabschnitt zum Verdampfen des Kühlfluids und einen Kondensationsabschnitt zum Kondensieren des Kühlfluids aufweist. Dabei ist der Kondensationsabschnitt wenigstens eines Kühlkanals beispielsweise ein dem Massenmittelpunkt des Trägers zugewandter Abschnitt des Kühlkanals. Ferner ist vorzugsweise wenigstens ein Kühlkanal ringförmig ausgebildet. Des Weiteren weist der Träger beispielsweise im Bereich wenigstens eines Kondensationsabschnitts eine Kühlstruktur auf, insbesondere eine von Kühlrippen gebildete Kühlstruktur.

Die vorgenannten Ausgestaltungen der Gleichrichtervorrichtung sind insbesondere auf den Fall gerichtet, dass die Gleichrichtervorrichtung in ihrem Betrieb um den Massenmittelpunkt des Trägers rotiert, beispielsweise bei der Verwendung an einer Erregermaschine. Durch die Rotation der Gleichrichtervorrichtung wirken eine Zentrifugalkraft und eine Corioliskraft auf das Kühlfluid, die bei geeigneter Anordnung des Kühlkanals, insbesondere wenn dessen Kondensationsabschnitt ein dem Massenmittelpunkt des Trägers zugewandter Abschnitt des Kühlkanals ist, flüssiges Kühlfluid von dem Kondensationsabschnitt zu dem Verdampfungsabschnitt treiben, in dem das flüssige Kühlfluid von den elektrischen Bauelementen erzeugte Wärme aufnimmt und verdampft. Durch nachströmendes flüssiges Kühlfluid wird verdampftes gasförmiges Kühlfluid aus dem Verdampfungsabschnitt verdrängt und strömt zu dem Kondensationsabschnitt, in dem es kondensiert und dadurch Wärme abgibt. Der Kühlkanal wirkt dadurch wie ein Thermosiphon, wobei die Zentrifugalkraft und die Corioliskraft die Rolle der Schwerkraft des bekannten Thermosiphon-Effekts übernehmen. Mit einer ringförmigen Ausbildung des Kühlkanals kann dieser Effekt besonders gut unterstützt werden. Eine im Bereich des Kondensationsabschnitts angeordnete Kühlstruktur verbessert vorteilhaft die Entwärmung des Kühlfluids.

Bei einer weiteren Ausgestaltung der Gleichrichtervorrichtung ist wenigstens ein Trägerhohlraum ein Latentwärmespeichervolumen, in dem als Kühlmedium ein Phasenwechselmaterial zur Speicherung von Wärme in Form von latenter Wärme angeordnet ist. Beispielsweise ist wenigstens ein Latentwärmespeichervolumen von einer Gitterstruktur des Trägers durchsetzt. In Kombination mit einem Kühlkanal ist wenigstens ein Latentwärmespeichervolumen ferner vorzugsweise neben einem Abschnitt des Kühlkanals angeordnet.

Bei den vorgenannten Ausgestaltungen der Gleichrichtervorrichtung wirkt das in dem Latentwärmespeichervolumen angeordnete Phasenwechselmaterial als Latentwärmespeicher, um von den elektrischen Bauelementen erzeugte Wärme aufzunehmen. Durch eine Gitterstruktur des Trägers, die das Latentwärmespeichervolumen durchsetzt, kann die Wärme besser auf das typischerweise schlecht wärmeleitende Phasenwechselmaterial verteilt und dadurch ein Phasenwechsel des Phasenwechselmaterials schneller herbeigeführt werden. Ferner trägt die Gitterstruktur zusätzlich zur mechanischen Festigkeit des Trägers bei. In Verbindung mit einem Kühlkanal ist ein derartiger Latentwärmespeicher beispielsweise vorteilhaft, wenn von den elektrischen Bauelementen (beispielsweise im Fall von Spitzenlasten) besonders viel Wärme erzeugt wird, die in dem Kühlkanal nicht schnell genug weg transportiert wird. Daher ist es besonders vorteilhaft, ein Latentwärmespeichervolumen in der Nähe eines Abschnitts des Kühlkanals anzuordnen, insbesondere neben einem Verbindungsabschnitt des Kühlkanals, in dem im Betrieb der Gleichrichtervorrichtung Kühlmedium von dem Verdampfungsabschnitt zu dem Kondensationsabschnitt strömt. Insbesondere ermöglicht die Kombination von Kühlkanälen und Latentwärmespeichern vorteilhaft, die Gleichrichtervorrichtung auf eine Nennlast statt auf eine Spitzenlast auszulegen und somit kompakter und leichter zu gestalten.

Bei einer weiteren Ausgestaltung der Gleichrichtervorrichtung weist der Träger wenigstens eine Aussparung auf. Dadurch werden vorteilhaft die Masse und das Trägheitsmoment der Gleichrichtervorrichtung reduziert.

Bei einem erfindungsgemäßen Verfahren zum Herstellen einer erfindungsgemäßen Gleichrichtervorrichtung wird der Träger mit einem 3D-Druck-Verfahren gefertigt, beispielsweise aus einer Titan- oder Aluminiumlegierung oder aus einem anderen Leichtbauwerkstoff. Vorzugsweise wird ferner eine geometrische Struktur des Trägers durch eine Topologieoptimierung berechnet, mit der eine Masse und/oder ein Trägheitsmoment des Trägers bezüglich einer Rotationsachse minimiert wird.

Mit einem 3D-Druck-Verfahren wird ein additives Fertigungsverfahren bezeichnet, bei dem Material schichtweise aufgetragen wird, um ein dreidimensionales Objekt zu fertigen. Unter Topologieoptimierung wird ein computerbasiertes Berechnungsverfahren zur Optimierung einer geometrischen Struktur eines Objekts verstanden, das meist auf der Finite-Elemente-Methode basiert.

Ein 3D-Druck-Verfahren ermöglicht die Herstellung komplexer Strukturen, die mit anderen bekannten Fertigungsverfahren nicht hergestellt werden können. Daher eignet sich ein 3D-Druck-Verfahren insbesondere zum Herstellen des Trägers einer erfindungsgemäßen Gleichrichtervorrichtung, beispielsweise mit speziell gestalteten Kühlkanälen, Latentwärmespeichervolumen, Kühlstrukturen und/oder Aussparungen. Insbesondere kann der Träger dadurch präzise gemäß den Berechnungen einer Topologieoptimierung hergestellt werden, die oftmals sehr komplexe Geometrien ergibt. Des Weiteren kann ein 3D-Druck-Verfahren mit hochperformanten Leichtbauwerkstoffen, insbesondere mit Titan- oder Aluminiumlegierungen, ausgeführt werden, wodurch das Gewicht der Gleichrichtervorrichtung weiter reduziert werden kann. Besonders vorteilhaft sind in diesem Zusammenhang Aluminiumlegierungen, da diese neben den Leichtbaueigenschaften auch eine vergleichsweise hohe Wärmeleitfähigkeit aufweisen. Außerdem ermöglicht der 3D-Druck des Trägers die einteilige Bauweise von tragender Struktur und Kühlstrukturen der Gleichrichtervorrichtung, die vorteilhaft den Wärmewiderstand des Trägers reduziert.

Eine erfindungsgemäße Erregermaschine weist eine erfindungsgemäße Gleichrichtervorrichtung auf. Neben den oben bereits genannten Vorteilen ermöglicht eine erfindungsgemäße Gleichrichtervorrichtung durch ihre optimierte Massenverteilung auch eine Reduzierung der Masse der Erregermaschine. Ferner ermöglicht die optimierte Massenverteilung insbesondere auch eine problemlosere Anordnung der Gleichrichtervorrichtung an einem Ende der Rotorwelle, das über die Hauptlager der Rotorwelle hinausragt. Dadurch kann der Abstand der Hauptlager gegenüber einer Anordnung der Gleichrichtervorrichtung zwischen den Hauptlagern verringert werden. Letzteres reduziert wiederum die für die Erregermaschine benötigte Aufstellfläche und den Platzbedarf für die Installation und den Betrieb der Erregermaschine. Außerdem ermöglicht eine Reduktion des Abstands der Hauptlager der Rotorwelle ein breiteres Spektrum an Rotationsfrequenzen der Rotorwelle ohne das Auftreten unerwünschter Eigenfrequenzen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 ein erstes Ausführungsbeispiel einer Erregermaschine,
FIG 2 ein zweites Ausführungsbeispiel einer Erregermaschine,
FIG 3 eine Frontansicht eines ersten Ausführungsbeispiels einer Gleichrichtervorrichtung,
FIG 4 eine Schnittdarstellung des in Figur 3 gezeigten Ausführungsbeispiels einer Gleichrichtervorrichtung,
FIG 5 eine Frontansicht eines zweiten Ausführungsbeispiels einer Gleichrichtervorrichtung,
FIG 6 eine Frontansicht eines dritten Ausführungsbeispiels einer Gleichrichtervorrichtung,
FIG 7 eine Frontansicht eines vierten Ausführungsbeispiels einer Gleichrichtervorrichtung.

Einander entsprechende Teile sind in den Figuren mit denselben Bezugszeichen versehen.

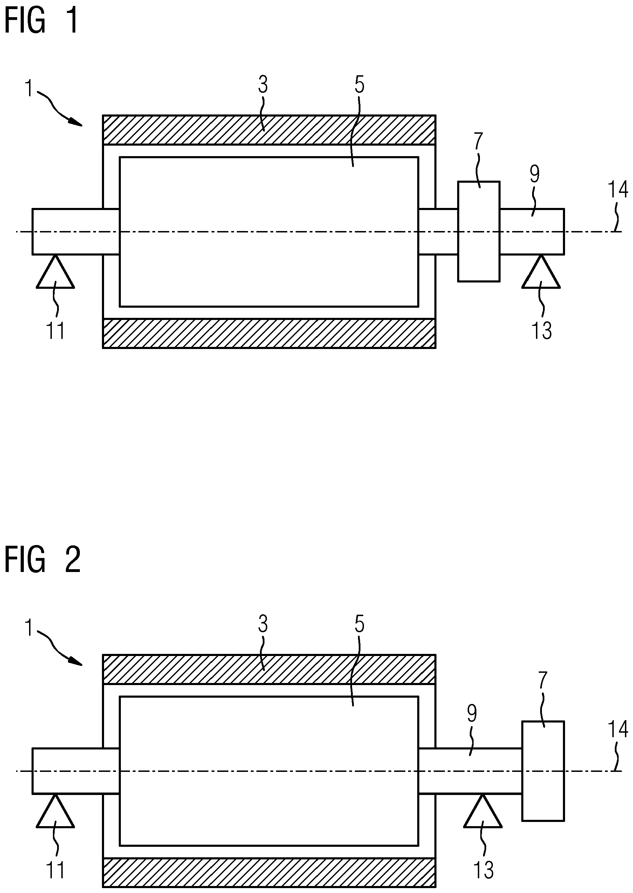

Figur 1 zeigt schematisch ein erstes Ausführungsbeispiel einer erfindungsgemäßen Erregermaschine 1. Die Erregermaschine 1 umfasst einen Stator 3, einen Rotor 5 und eine erfindungsgemäße Gleichrichtervorrichtung 7.

Der Stator 3 ist geschnitten dargestellt und im Wesentlichen hohlzylinderförmig ausgebildet.

Der Rotor 5 ist in dem Stator 3 beziehungsweise von dem Stator 3 umgeben angeordnet. Der Rotor 5 und die Gleichrichtervorrichtung 7 sind fest an einer Rotorwelle 9 angeordnet. Die Rotorwelle 9 ist durch zwei Hauptlager 11, 13 rotierbar um eine Rotationsachse 14 gelagert. Der Rotor 5 und die Gleichrichtervorrichtung 7 sind zwischen den beiden Hauptlagern 11, 13 angeordnet.

Figur 2 zeigt schematisch ein zweites Ausführungsbeispiel einer erfindungsgemäßen Erregermaschine 1. Dieses Ausführungsbeispiel unterscheidet sich von dem in Figur 1 gezeigten Ausführungsbeispiel lediglich dadurch, dass die Gleichrichtervorrichtung 7 nicht zwischen den beiden Hauptlagern 11, 13 an der Rotorwelle 9, sondern an einem Ende der Rotorwelle 9 angeordnet ist.

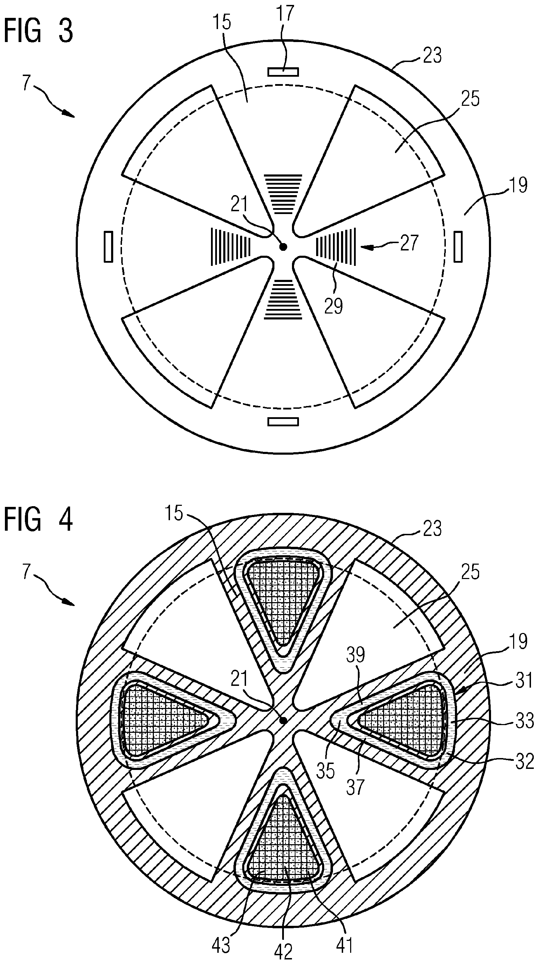

Die Figuren 3 und 4 zeigen ein erstes Ausführungsbeispiel einer erfindungsgemäßen Gleichrichtervorrichtung 7 zum Gleichrichten eines elektrischen Wechselstroms. Dabei zeigt Figur 3 eine Frontansicht der Gleichrichtervorrichtung 7 und Figur 4 zeigt eine Schnittdarstellung der Gleichrichtervorrichtung 7. Die Gleichrichtervorrichtung 7 weist einen Träger 15 und elektrische Bauelemente 17 auf. Die elektrischen Bauelemente 17 sind beispielsweise Dioden. Die elektrischen Bauelemente 17 sind an einem Gleichrichterbereich 19 des Trägers 15 angeordnet, der ringförmig um den Massenmittelpunkt 21 des Trägers 15 herum verläuft und ein Randbereich des Trägers 15 ist. In Figur 3 liegt der Gleichrichterbereich 19 zwischen einer gestrichelt dargestellten Kreislinie und einem äußeren Rand 23 des Trägers 15.

Der Träger 15 weist mehrere Aussparungen 25 auf, die sich jeweils entlang einer radialen Richtung zwischen dem Massenmittelpunkt 21 und dem äußeren Rand 23 erstrecken und deren Ausdehnung senkrecht zu der radialen Richtung zu dem äußeren Rand 23 hin zunimmt. Zwischen je zwei benachbarten Aussparungen 25 weist der Träger 15 in der Nähe der massenmittelpunktseitigen Enden dieser Aussparungen 25 eine Kühlstruktur 27 auf, die von Kühlrippen 29 gebildet wird.

Ferner weist der Träger 15 in seinem Innern zwischen je zwei benachbarten Aussparungen 25 einen ringförmigen Kühlkanal 31 mit einem hermetisch gekapselten Volumen auf, in dem ein Kühlfluid 32, beispielsweise Wasser, angeordnet ist. Jeder Kühlkanal 31 weist einen Verdampfungsabschnitt 33, einen Kondensationsabschnitt 35 und zwei Verbindungsabschnitte 37, 39 auf. Der Verdampfungsabschnitt 33 verläuft in dem Gleichrichterbereich 19 des Trägers 15 parallel zu einem Abschnitt des äußeren Randes 23 in der Nähe eines der elektrischen Bauelemente 17. Der Kondensationsabschnitt 35 verläuft unterhalb einer Kühlstruktur 27 und bildet einen massenmittelpunktseitigen Teil des Kühlkanals 31. Jeder Verbindungsabschnitt 37, 39 verläuft radial von dem Kondensationsabschnitt 35 zu einem Ende des Verdampfungsabschnitts 33.

Außerdem weist der Träger 15 für jeden Kühlkanal 31 ein hermetisch gekapseltes Latentwärmespeichervolumen 41 auf, um das der Kühlkanal 31 herumgeführt ist und in dem ein Phasenwechselmaterial 42, beispielsweise Paraffin, zur Speicherung von Wärme in Form von latenter Wärme angeordnet ist. Jedes Latentwärmespeichervolumen 41 ist von einer Gitterstruktur 43 des Trägers 15 durchsetzt.

Im Betrieb der Gleichrichtervorrichtung 7 nimmt flüssiges Kühlfluid 32 in den Verdampfungsabschnitten 33 der Kühlkanäle 31 von den elektrischen Bauelementen 17 erzeugte Wärme auf und verdampft, während gasförmiges Kühlfluid 32 in den Kondensationsabschnitten 35 kondensiert und dabei Wärme abgibt. Die Gleichrichtervorrichtung 7 rotiert um den Massenmittelpunkt 21, durch den die Rotationsachse 14 verläuft. Durch die Rotation wirken eine Zentrifugalkraft und eine Corioliskraft auf das Kühlfluid 32, die ein Zirkulieren des Kühlfluids 32 in einem Kühlkanal 31 bewirken, indem sie flüssiges Kühlfluid 32 entlang eines (von der Rotationsrichtung abhängigen) Verbindungsabschnitts 37, 39 des Kühlkanals 31 von dem Kondensationsabschnitt 35 zu dem Verdampfungsabschnitt 33 und Kühlfluid 32 in dem Verdampfungsabschnitt 33 zu dem anderen Verbindungsabschnitt 37, 39 treiben, in dem das Kühlfluid 32 zurück zu dem Kondensationsabschnitt 35 strömt. Jeder Kühlkanal 31 wirkt dabei wie ein Thermosiphon, wobei die Zentrifugalkraft und die Corioliskraft die Rolle der Schwerkraft des bekannten Thermosiphon-Effekts übernehmen.

Das in den Latentwärmespeichervolumen 41 angeordnete Phasenwechselmaterial 42 wirkt als Latentwärmespeicher, um zusätzlich von den elektrischen Bauelementen 17 erzeugte Wärme aufzunehmen, insbesondere wenn von den elektrischen Bauelementen 17 (beispielsweise im Fall von Spitzenlasten beim Anlaufen der Erregermaschine 1) besonders viel Wärme erzeugt wird, die in den Kühlkanälen 31 nicht schnell genug weg transportiert wird.

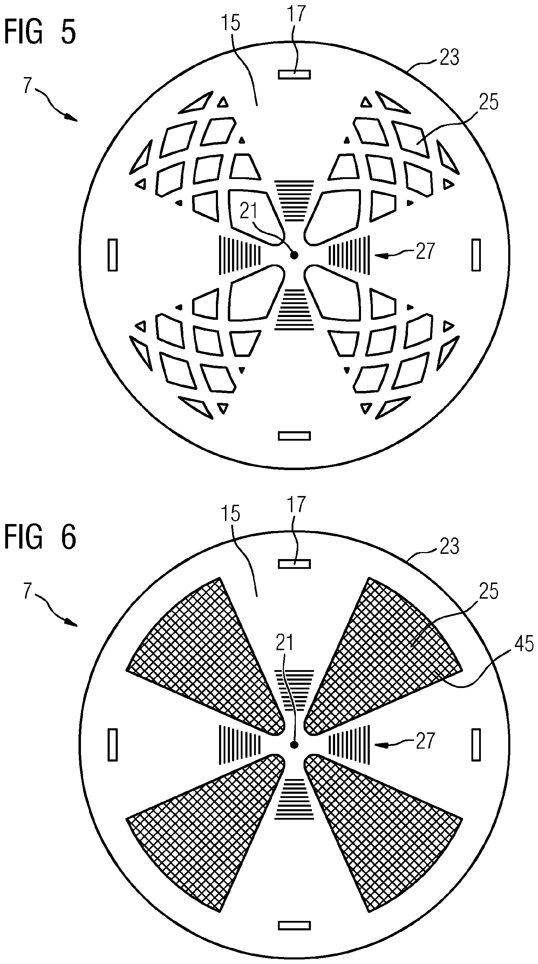

Figur 5 zeigt eine Frontansicht eines zweiten Ausführungsbeispiels einer Gleichrichtervorrichtung 7. Dieses Ausführungsbeispiel unterscheidet sich von dem in den Figuren 3 und 4 dargestellten Ausführungsbeispiel lediglich dadurch, dass jede der in den Figuren 3 und 4 gezeigten Aussparungen 25 durch einen Bereich des Trägers 15 ersetzt ist, in dem mehrere Aussparungen 25 angeordnet sind. Die Form der Aussparungen 25 kann beispielsweise vorteilhaft mit einer Topologieoptimierung berechnet werden.

Figur 6 zeigt eine Frontansicht eines dritten Ausführungsbeispiels einer Gleichrichtervorrichtung 7. Dieses Ausführungsbeispiel unterscheidet sich von dem in den Figuren 3 und 4 dargestellten Ausführungsbeispiel lediglich dadurch, dass jede der in den Figuren 3 und 4 gezeigten Aussparungen 25 von einer weiteren Gitterstruktur 45 des Trägers 15 durchsetzt ist. Beispielsweise weist die Gitterstruktur 45 Streben mit einer Dicke im Bereich von 0,5 mm bis 3 mm und Gitterabstände im Bereich von 1 mm bis 5 mm auf. Diese Parameter werden beispielsweise derart bestimmt, dass der Träger 15 eine maximale Festigkeit und Steifigkeit bei minimalem Gewicht aufweist.

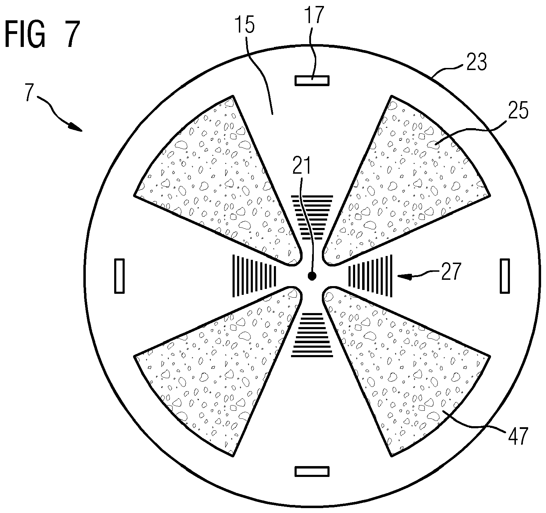

Figur 7 zeigt eine Frontansicht eines vierten Ausführungsbeispiels einer Gleichrichtervorrichtung 7. Dieses Ausführungsbeispiel unterscheidet sich von dem in den Figuren 3 und 4 dargestellten Ausführungsbeispiel lediglich dadurch, dass jede der in den Figuren 3 und 4 gezeigten Aussparungen 25 durch einen porösen Bereich 47 des Trägers 15 ersetzt ist, in dem ein Vielzahl von kleinen Aussparungen 25 angeordnet ist. Die Porosität der porösen Bereiche 47 kann dabei durch eine Designvorgabe oder durch gezielte Verwendung bestimmter Prozessparameter in einem 3D-Druck-Verfahren hergestellt werden.

Die in den Figuren 3 bis 7 gezeigten Ausführungsbeispiele einer erfindungsgemäßen Gleichrichtervorrichtung 7 können auf verschiedene Weisen zu weiteren Ausführungsbeispielen abgewandelt werden. Beispielsweise können die Kühlkanäle 31 eine andere Form als die in Figur 4 gezeigten Kühlkanäle 31 aufweisen, beispielsweise eine elliptische oder geradlinige Form. Auch die Latentwärmespeichervolumen 41 können eine andere Form als in Figur 4 aufweisen und/oder ohne die Gitterstruktur 43 ausgeführt sein. Besonders einfache Ausführungsbeispiele einer erfindungsgemäßen Gleichrichtervorrichtung 7 weisen gar kein Latentwärmespeichervolumen 41 auf. Ferner kann beispielsweise das in den Figuren 3 und 4 gezeigte Ausführungsbeispiel dadurch abgewandelt werden, dass die Gleichrichtervorrichtung 7 eine von Vier verschiedene Anzahl von elektrischen Bauelementen 17, Aussparungen 25, Kühlkanälen 31, Kühlstrukturen 27 und/oder Latentwärmespeichervolumen 41 aufweist, und entsprechend können auch die in den Figuren 5 bis 7 gezeigten Ausführungsbeispiele abgewandelt werden.

Die in den Figuren 3 bis 7 dargestellten Gleichrichtervorrichtungen 7 sind für die Montage an dem Ende einer Rotorwelle 9 wie bei dem in Figur 2 gezeigten Ausführungsbeispiel einer Erregermaschine 1 konzipiert. Für eine Montage an der Rotorwelle 9 wie bei dem in Figur 1 gezeigten Ausführungsbeispiel einer Erregermaschine 1 wird der Träger 15 mit einer Ausnehmung zur Durchführung der Rotorwelle 9 ausgeführt.

Bei allen in den Figuren 3 bis 7 dargestellten Gleichrichtervorrichtungen 7 und deren Abwandlungen wird der Träger 15 vorzugsweise mit einem 3D-Druck-Verfahren, beispielsweise aus einer Titan- oder Aluminiumlegierung oder aus einem anderen Leichtbauwerkstoff, gefertigt. Die Kühlkanäle 31 und Latentwärmespeichervolumen 41 werden dabei jeweils mit wenigstens einer Öffnung gefertigt, durch die sie anschließend mit dem Kühlfluid 32 beziehungsweise dem Phasenwechselmaterial 42 befüllt werden. Die Öffnungen werden nach dem Befüllen verschlossen. Ferner wird die geometrische Struktur des Trägers 15 beispielsweise durch eine Topologieoptimierung berechnet, mit der eine Masse und/oder ein Trägheitsmoment des Trägers 15 bezüglich der Rotationsachse 14 minimiert wird.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Gleichrichtervorrichtung (7) zum Gleichrichten eines elektrischen Wechselstroms, die Gleichrichtervorrichtung (7) umfassend
- einen Träger (15) und
- an einem Gleichrichterbereich (19) des Trägers (15) angeordnete elektrische Bauelemente (17),
- wobei der Träger (15) wenigstens einen Trägerhohlraum (31, 41) mit einem hermetisch gekapselten Volumen aufweist, in dem ein Kühlmedium (32, 42) zur Aufnahme von den elektrischen Bauelementen (17) erzeugter Wärme angeordnet ist.

2. Gleichrichtervorrichtung (7) nach Anspruch 1, wobei der Gleichrichterbereich (19) des Trägers (15) ringförmig um den Massenmittelpunkt (21) des Trägers (15) herum verläuft.

3. Gleichrichtervorrichtung (7) nach Anspruch 1 oder 2, wobei der Gleichrichterbereich (19) ein Randbereich des Trägers (15) ist.

4. Gleichrichtervorrichtung (7) nach einem der vorhergehenden Ansprüche, wobei wenigstens ein Trägerhohlraum ein Kühlkanal (31) ist, in dem als Kühlmedium ein Kühlfluid (32) angeordnet ist und der einen in dem Gleichrichterbereich (19) des Trägers (15) verlaufenden Verdampfungsabschnitt (33) zum Verdampfen des Kühlfluids (32) und einen Kondensationsabschnitt (35) zum Kondensieren des Kühlfluids (32) aufweist.

5. Gleichrichtervorrichtung (7) nach Anspruch 4, wobei der Kondensationsabschnitt (35) wenigstens eines Kühlkanals (31) ein dem Massenmittelpunkt (21) des Trägers (15) zugewandter Abschnitt des Kühlkanals (31) ist.

6. Gleichrichtervorrichtung (7) nach Anspruch 4 oder 5, wobei wenigstens ein Kühlkanal (31) ringförmig ausgebildet ist.

7. Gleichrichtervorrichtung (7) nach einem der Ansprüche 4 bis 6, wobei der Träger (15) im Bereich wenigstens eines Kondensationsabschnitts (35) eine Kühlstruktur (27), insbesondere eine von Kühlrippen (29) gebildete Kühlstruktur (27), aufweist.

8. Gleichrichtervorrichtung (7) nach einem der vorhergehenden Ansprüche, wobei wenigstens ein Trägerhohlraum ein Latentwärmespeichervolumen (41) ist, in dem als Kühlmedium ein Phasenwechselmaterial (42) zur Speicherung von Wärme in Form von latenter Wärme angeordnet ist.

9. Gleichrichtervorrichtung (7) nach Anspruch 8, wobei wenigstens ein Latentwärmespeichervolumen (41) von einer Gitterstruktur (43) des Trägers (15) durchsetzt ist.

10. Gleichrichtervorrichtung (7) nach einem der Ansprüche 4 bis 7 und Anspruch 8 oder 9, wobei wenigstens ein Latentwärmespeichervolumen (41) neben einem Abschnitt eines Kühlkanals (31) angeordnet ist.

11. Gleichrichtervorrichtung (7) nach einem der vorhergehenden Ansprüche, wobei der Träger (15) wenigstens eine Aussparung (25) aufweist.

12. Verfahren zum Herstellen einer Gleichrichtervorrichtung (7) nach einem der vorhergehenden Ansprüche, wobei der Träger (15) mit einem 3D-Druck-Verfahren gefertigt wird.

13. Verfahren nach Anspruch 12, wobei der Träger (15) aus einer Titan- oder Aluminiumlegierung oder aus einem anderen Leichtbauwerkstoff gefertigt wird.

14. Verfahren nach Anspruch 12 oder 13, wobei eine geometrische Struktur des Trägers (15) durch eine Topologieoptimierung berechnet wird, mit der eine Masse des Trägers (15) und/oder ein Trägheitsmoment des Trägers (15) bezüglich einer Rotationsachse (14) minimiert wird.

15. Erregermaschine (1) mit einer Gleichrichtervorrichtung (7) nach einem der Ansprüche 1 bis 11.
